Europäisches Patentamt

European Patent Office

Office européen des brevets

(11) Publication number: **0 502 405 A1**

# EUROPEAN PATENT APPLICATION

(21) Application number: **92103173.8**

(22) Date of filing: **25.02.92**

(51) Int. Cl.5: **B60Q  1/068**

Priority: 050391 IT TO91000155.

(30) Priority: **05.03.91**

(43) Date of publication of application:
**09.09.92 Bulletin  92/37**

(84) Designated Contracting States:
**DE ES FR GB**

(71) Applicant: **CARELLO S.p.A.**

Corso Unione Sovietica, 600
I-10135 Torino(IT)

(72) Inventor: **Toso, Roberto**
**Via Raffaello Sanzio, 8/A**
**I-10040 Druento(IT)**

(74) Representative: **Jorio, Paolo et al**
**Studio Torta, Via Viotti, 9**
**I-10121 Torino(IT)**

(54) **Adjustable inclination headlamp.**

(57) A headlamp (1) for vehicles in which a reflector (4) with adjustable inclination is controlled by an actuator (7) via a transmission member (18) coupled to a projecting member (19) of the actuator (7) by means of a ball joint (20), a spherical seat of which (26) is defined by an elastically deformable cup member (23) borne by the transmission member (18) which can move under the thrust of the projecting member (19) of the actuator (7) with respect to an outer tubular securing member (14) between an outer engaged position and an inner working position; the cup member (23) being defined by two half cups (24, 25) borne by corresponding elastic blades (32, 33) which at least in part define the transmission member (18) and are associated with a divaricator (36, 43) which tends to move the half cups (24, 25) apart.

Fig.1

This invention relates to a headlamp for vehicles with motorised direction adjustment.

A headlamp for vehicles of the type described above generally comprises a fixed housing, within which is housed a reflector which can rotate about a substantially horizontal axis, and whose position may be varied by means of an actuator. In general the actuator has a projecting member which is connected to a recessed member of an articulated transmission which is in turn connected to the headlamp at a point which is at a specific distance from the axis of rotation.

In known headlamps of the type described above the connection between the actuator's projecting member and the recessed member of the said transmission is normally provided by means of a snap-on ball joint comprising a cup member provided with a plurality of elastically deformable leaves and placed at one end of the recessed member.

The said recessed member normally extends through a tubular body and the corresponding cup member can move with respect to the tubular body between a first engaged position in which the cup member is located outside the tubular body and a working position in which the cup member is in any one axial position within the said tubular body. When the cup member is located in the said engaged position the corresponding leaves bend outwards taking up their undeformed resting configuration thus allowing the said spherical head to snap into the corresponding spherical seat with minimum axial force. The spherical head can penetrate within the corresponding seat as a result of the contrast between the said leaves in their unbent resting position and a projecting edge of a tubular body. In fact this penetration is only possible when the force required to bend the leaves inwards and place them within the tubular body is greater than the force required when the spherical head is snap connected to the corresponding seat.

If this does not happen, or if the force required for snap connecting the spherical head to the corresponding seat is greater than the force required for bending the said leaves inwards, it would be substantially impossible to automatically couple the projecting member of the actuator to the said recessed member from the outside, given that the corresponding cup member would penetrate within the tubular body before the snap connection was made between the spherical head and the spherical seat, thus making it impossible to effect a similar connection subsequently given that the main function of the said tubular body is to secure the leaves in a closed position, preventing elastic bending inwards and possible accidental release of the head from the spherical seat.

Unfortunately, it has been found that in known headlamps of the type described above ageing phenomena aggravated by unfavourable environmental conditions bring about collapse of the leaves in a short time and therefore a drastic reduction in the axial force required to make the cam member enter the tubular body, with all the disadvantageous consequences indicated above.

The object of this invention is therefore to provide a headlamp of the type described above which is free from such disadvantage.

In accordance with this invention a headlamp with adjustable inclination is provided and comprises an outer housing, a reflector mounted in an orientatable way within the housing so as to rotate with respect to the said housing about at least one axis, and actuator means to rotate the said reflector about the said axis, the actuator means comprising a projecting member and an articulated transmission which in turn comprises a recessed member and a ball joint making a snap connection between the said recessed and projecting members, the joint comprising a spherical head which is integral with the projecting member and a cup member which is integral with the recessed member and comprising at least two elastically deformable leaves, and securing means borne on the housing to secure the head within the cam member, characterised in that it also comprises divaricator means tending to separate the said leaves from each other.

The invention will now be described with reference to the appended drawings, which illustrate a non-restrictive embodiment of the invention, in which:

Figure 1 shows a longitudinal cross-section of an embodiment of the headlamp according to the invention,

Figure 2 illustrates a detail of Figure 1 in axial cross-section and on an enlarged scale,

Figure 3 is similar to Figure 2 and illustrates the detail in Figure 2 in a different operating position, and

Figure 4 is similar to Figure 2, and relates to a variant of the detail in Figure 2.

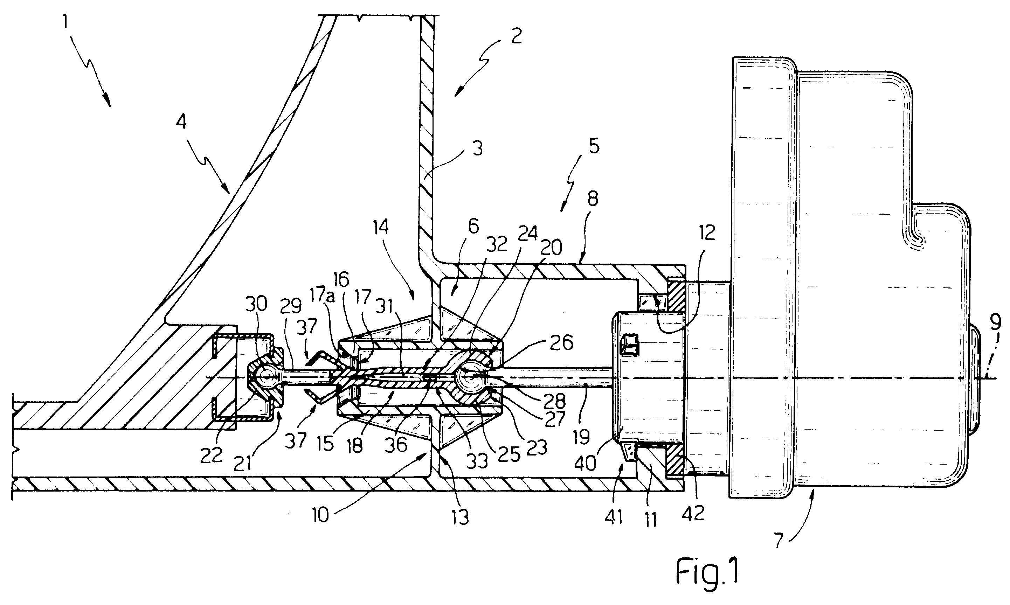

With reference to Figure 1, 1 indicates an adjustable inclination headlamp as a whole, comprising a housing 2 in the form of a dish with a base wall 3 connected in a known way to the rear of a reflector 4 which can be orientated with respect to housing 2 about an axis (not illustrated) which is normal to the plane of Figure 1.

Headlamp 1 also comprises an actuator device 5 located between housing 2 and reflector 4 to rotate reflector 4 about the said axis (not shown) normal to the plane of Figure 1. Actuator device 5 comprises an articulated transmission 6 located between reflector 4 and a reversible linear actuator 7, which is preferably of the electromechanical type.

Actuator 7 is supported by a cylindrical tubular appendage 8 which extends outwards from base wall 3 and has an axis 9 which lies in the plane of Figure 1. Appendage 8 communicates anteriorly with the inside of the housing via a front opening 10 and is closed posteriorly by a transverse end wall 11 which has an axial through hole 12 which is coaxial with axis 9 and is engaged by actuator 7 as will be more particularly described below.

Base wall 3 is provided with a bracket 13 located within housing 2 in a position substantially perpendicular to axis 9 and substantially closing off communication between tubular appendage 8 and an inner space in housing 2. Bracket 13 is traversed by a tubular body 14 having internally a cylindrical guide seat 15 which is coaxial with axis 9. At its front end tubular body 14 has an annular inner rib 16 coaxial with axis 9 and extending radially inwards to define a rebated surface 17 facing appendage 8 and a frustoconical rebated surface 17a facing the part opposite surface 17.

Transmission 6 comprises an input member 18 which can move axially along cylindrical seat 15 and has a rear end connected to the free end of an axially mobile output member 19 of actuator 7 by means of a first snap ball joint 20 and a front end attached to reflector 4 by means of a second snap ball joint 21, a spherical seat 22 of which is made integral in a known way with a posterior surface of reflector 4.

Ball joint 20 comprises a corresponding cup member 23 which consists of two half cups 24 and 25 which between them form a spherical seat 26 having a rear access aperature 27 and snap engaged to a corresponding spherical head 28.

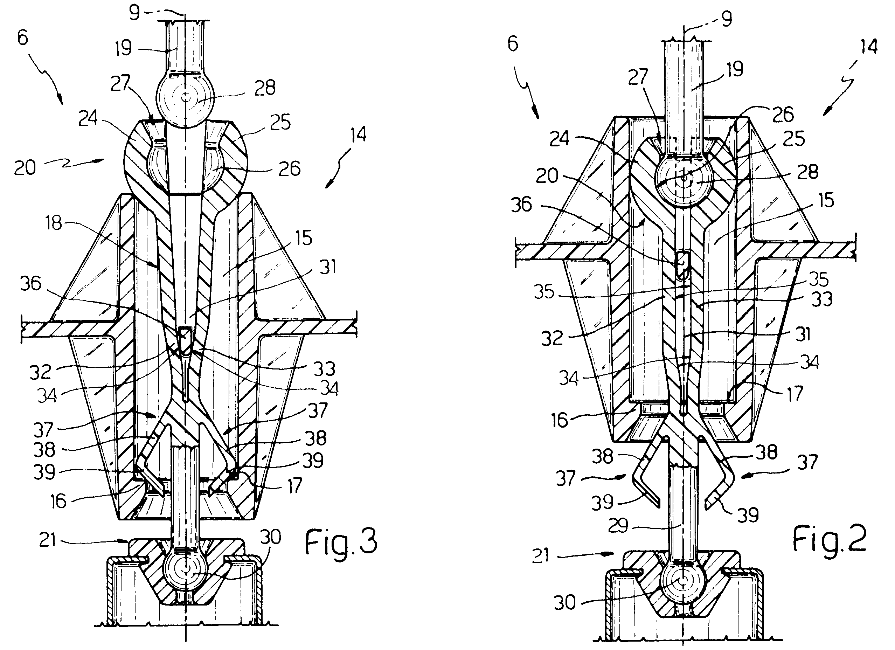

With reference to Figure 2, recessed member 18 comprises a shaft 29 which has integrally attached thereto at a front end thereof a spherical head 30 of joint 21 and has a rear end portion which is subdivided by an axial notch 31 into two elastic blades 32 and 33 at the posterior ends of which two half cups 24 and 25 are integrally attached.

The two blades 32 and 33 have slightly divergent corresponding forward portions 34 and corresponding rear portions 35 which are substantially parallel to each other in order to allow a divaricating wedge 36 located transversely to axis 9 and integrally attached at its own opposing ends to diametrically opposite points in an intermediate portion of cylindrical seat 15 of tubular body 14 to be passed between posterior portions 35 under normal operating conditions.

Recessed member 18 also has a pair of lateral appendages 37 which are symmetrical with respect to axis 9 and elastically deformable, and are substantially in the shape of L and extend outwards from diametrically opposite points on recessed member 18. In particular each appendage 37 has a first arm 38 which is inclined forwards and outwards with respect to axis 9, and a second arm 39 which is substantially perpendicular to corresponding arm 38 and extends forwards and towards axis 9 from the free end of corresponding arm 38.

As illustrated in Figure 3, the position of appendages 37 along recessed member 18 is such that arms 39 bear against rebated surface 17 when half cups 24 and 25 are located in a so-called "engaged" position immediately outside the rear end of tubular body 14.

As illustrated in Figure 1, actuator 7 comprises an outer casing which has a lateral tubular appendage 40 through which projecting member 19 extends outwards. Appendage 40 is coaxial with projecting member 19 and is coupled to appendage 8 by means of a bayonet joint 41 with an intermediate seal 42.

The mounting of actuator 7 on housing 2 and the coupling of actuator 7 to reflector 4 from the position illustrated in Figure 3, in which actuator 7 is disconnected from reflector 4, and recessed member 18 is placed in its so-called engaged position with its half cups 24 and 25 located outside tubular body 14 and arms 39 of corresponding appendages 37 placed in contact with rebated surface 17, will be described below.

In the said engaged position divaricating wedge 36 is engaged along the part of notch 31 defined by the anterior portions 34 of blades 32 and 33, in such a way as to hold the two half cups 24 and 25 in a divergent position outside the posterior end of tubular body 14.

When actuator 7 is mounted on housing 2 the axial engagement of tubular appendage 40 within appendage 8 causes spherical head 28 to move progressively within seat 26 via aperture 27 which is held open by wedge 36. A further axial advance of appendage 40 within appendage 8 to allow bayonet joint 41 to close first causes projecting member 18 to apply an axial force through head 28 to deform appendages 37 in such a way as to make them snap over rib 16 and compress the two half cups 24 and 25 against each other through the elastic bending of blades 32 and 33 in such a way as to allow half cups 24 and 25 to penetrate within seat 15 with a consequent reduction in the cross-section of opening 27, consequently securing head 28 within spherical seat 26. Tubular body 14 in fact acts as a guide for the displacement of joint 20, and as a member securing said joint 20.

Secondly the said further axial displacement of appendage 40 causes axial sliding of projecting member 18 along tubular body 14 so as to cause divaricator wedge 36 to slide freely along the portion of notch 31 defined by the posterior portions 35 of blades 32 and 33.

In use the inclination of reflector 4 is regulated by providing projecting member 18 with a maximum travel corresponding to the displacement of wedge 36 along the full length of the portion of notch 31 defined by the posterior portions 35 of blades 32 and 33.

The operations previously described, which relate to the stage in which actuator 7 is engaged with or connected to input member 18, are performed in the opposite order if it is desired to disconnect actuator 7 from housing 2.

From the above description it will be noted that, independently of the elasticity of blades 32 and 33, the two half cups 24 and 25 are always held apart by wedge 36 when in the engaged position in such a way that a relatively high axial force is always required in order to insert the two half cups 24 and 25 within tubular body 14, and in any event a greater force than that required to insert head 28 into seat 26 through opening 27. The said force for introducing half cups 24 and 25 into tubular body 14 is also increased by the presence of appendages 37, which in any event need not necessarily be present.

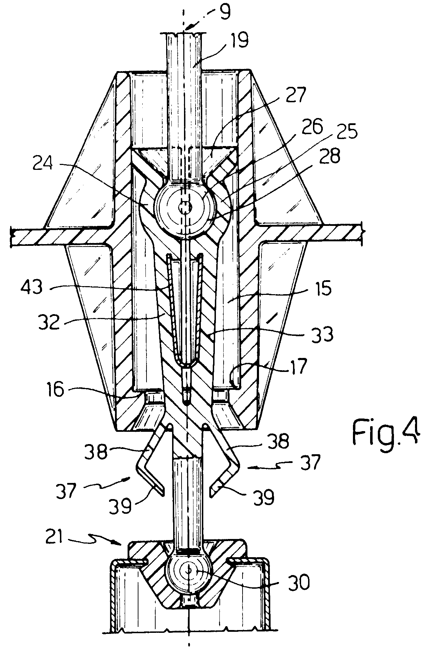

In accordance with the variant illustrated in Figure 4, divaricator wedge 36 in the foregoing figures is replaced by a cup spring 43, which is substantially U-shaped, which is compressively mounted between blades 32 and 33 with its own concavity facing half cups 24 and 25, and comprising two arms each of which are coupled to a corresponding blade 32, 33.

In accordance with a variant which is not illustrated, cup member 23 comprises three or more leaves which are integral with corresponding blades associated with divaricator members such as e.g. a cup spring similar to spring 43, but provided with a number of arms equal to the number of blades present, or a cross-shaped wedge having a number of arms equal to the number of blades present in order to separate each blade from each of the others.

## Claims

1. An adjustable inclination headlamp (1) comprising an outer housing (2), a reflector (4) which is mounted in an orientatable way within the housing (4) to rotate with respect to the said housing (4) about at least one axis, and actuator means (7) to rotate the said reflector (3) about the said axis, the actuator means (7) comprising a projecting member (19) and an articulated transmission (6) which in turn comprises a recessed member (18) and a snap ball joint (20) connecting together the said recessed (18) and projecting (19) members, the joint (20) comprising a spherical head (28) integral with the projecting member (19), and a cup member (23) integral with the recessed member (18) and comprising at least two elastically deformable leaves (24, 25), and securing means (14) being borne on the housing (2) to secure the head (28) within the cup member (23), characterised in that it also comprises divaricator means (36, 43) tending to separate the said leaves (24, 25) from each other.

2. A headlamp according to claim 1, characterised in that the said recessed member (18) has axial notch means (31) which partly subdivide the recessed member (18) into a number of axial portions (32, 33) equal to the number of the said leaves (24, 25), each leaf (24, 25) being integral with one end of a corresponding said axial portion (32, 33).

3. A headlamp according to claim 2, characterised in that the said divaricator means (36, 43) are coupled to the said axial portions (32, 33) of the recessed member (18).

4. A headlamp according to claim 3, characterised in that the said divaricator means (43) comprise elastic means compressed between the said axial portions (32, 33) of the recessed member (18).

5. A headlamp according to claim 4, characterised in that the said elastic means comprise a cup spring (43) with its concavity facing the said leaves (24, 25) and provided with a number of arms equal to the number of said axial portions (32, 33) of the recessed member (18).

6. A headlamp according to claim 3, characterised in that the said divaricator means (36) comprise a fixed divaricator wedge for each of the said notch means (31) extending through the corresponding notch means (31).

7. A headlamp according to any one of the foregoing claims, characterised in that the said securing means comprise a tubular body (14) slideably engaged by the said recessed member (18), the cup member (23) of the said joint (20) being capable of moving along the said tubular body (14) under normal operating conditions and being placed outside the said tubular body (14) in a position engaging the corresponding spherical head (28).

8. A headlamp according to claim 7, characterised in that snap interference means are placed between the said tubular body (14) and the said recessed member (18) is placed with its corresponding cup member (23) in the said engaged position.

Fig.1

Fig.2

Fig.3

Fig.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | DE-A-3 836 094 ( ROBERT BOSCH GMBH ) <br> * abstract; figure 1 * <br><br> ----- | 1 | B60Q1/068 |
| | | | TECHNICAL FIELDS SEARCHED (Int. Cl.5 ) <br><br> B60Q |

The present search report has been drawn up for all claims

| Place of search | Date of completion of the search | Examiner |
|---|---|---|
| THE HAGUE | 06 MAY 1992 | Onillon C.G.A. |

EPO FORM 1503 03.82 (P0401)